# EUROPÄISCHE PATENTSCHRIFT

(11) **EP 3 609 725 B1**
(45) Veröffentlichungstag und Bekanntmachung des Hinweises auf die Patenterteilung: **10.05.2023**
(21) Anmeldenummer: 18715484.4
(22) Anmeldetag: 06.03.2018
(51) Int. Cl.: B60H 1/00, B60H 1/32

(54) **VERFAHREN ZUR ENTEISUNG EINES AUSSENLUFTSEITIGEN WÄRMETAUSCHERS EINES KRAFTFAHRZEUGKLIMATISIERUNGSSYSTEMS MIT WÄRMEPUMPE**
METHOD FOR DE-ICING AN EXTERNAL-AIR HEAT EXCHANGER OF A MOTOR VEHICLE AIR-CONDITIONING SYSTEM WITH A HEAT PUMP
PROCÉDÉ DE DÉGIVRAGE D'UN ÉCHANGEUR DE CHALEUR CÔTÉ AIR EXTÉRIEUR D'UN SYSTÈME DE CLIMATISATION DE VÉHICULE AUTOMOBILE MUNI D'UNE POMPE À CHALEUR

(30) Priorität: 10.04.2017 DE 102017206135
(43) Veröffentlichungstag der Anmeldung: 19.02.2020
(73) Patentinhaber: Ford Global Technologies, LLC, Dearborn, MI 48126 (US); Ford-Werke GmbH, 50735 Köln (DE)
(72) Erfinder: LOSTREK, David, 50937 Köln (DE)
(74) Vertreter: Markowitz, Markus
(86) Internationale Anmeldenummer: PCT/EP2018/055488
(87) Internationale Veröffentlichungsnummer: WO 2018/188858

(56) Entgegenhaltungen:
- EP-A1- 2 263 894
- EP-A1- 2 752 315
- EP-B1- 2 263 894
- DE-T5-112014 004 045
- DE-T5-112014 004 045
- US-A1- 2011 067 427
- ALOIS STEINER ET AL: "Energieeffiziente Enteisung bei Pkw-Wärmepumpensystemen", ATZ, Bd. 117, Nr. 2, 15. Januar 2015 (2015-01-15), Seiten 40-43, XP055222833, ISSN: 0001-2785, DOI: 10.1007/s35148-015-0379-9

## Beschreibung

Die vorliegende Erfindung betrifft ein Verfahren zur Enteisung eines außenluftseitigen Wärmetauschers eines Kraftfahrzeugklimatisierungssystems mit Wärmepumpe. Ferner betrifft die Erfindung ein zur Durchführung des Verfahrens ausgebildetes Kraftfahrzeugklimatisierungssystem.

Bei Elektro- oder Hybridfahrzeugen stellt die Klimatisierung, insbesondere die Heizung des Fahrzeuginnenraums, eine Herausforderung dar, da hierzu nicht mehr die Abwärme eines Verbrennungsmotors zur Verfügung steht oder diese Abwärme jedenfalls nicht mehr in jedem Falle ausreicht. Eine grundsätzlich einfach und kostengünstig implementierbare Erwärmung des Fahrzeuginnenraums mittels elektrischer Widerstandsheizung führt insbesondere bei tiefen Außentemperaturen zu einer erheblichen Belastung der Batterie und damit zu einem signifikanten Reichweitenverlust bei einem Elektrofahrzeug.

Vor diesem Hintergrund ist bereits vorgeschlagen worden, die erforderliche Heizwärme der Umgebungsluft mittels einer Wärmepumpe zu entziehen, wozu im Prinzip ein konventioneller und bereits vorhandener Klimaanlagen-Kältekreislauf unter Umkehrung der Strömungsrichtung des Kältemittels verwendet werden kann.

Die so gewonnene Wärme wird in diesem Fall dem außenluftseitigen Wärmetauscher der Klimaanlage (der sich in der Regel innerhalb des Motorraums befindet) und damit der Umgebungsluft entnommen und über den ansonsten normalerweise der Kühlung dienenden Wärmetauscher im Fahrzeuginnenraum in einen Luftstrom abgegeben (Luft-zu-Luft-Wärmetauscher). Der Kompressor des Kältemittel-Kreislaufs benötigt hierzu im Allgemeinen deutlich weniger elektrische Energie als dies für eine unmittelbare ohmsche Heizung der Fall wäre, was durch die Arbeitszahl der Wärmepumpe ausgedrückt wird.

Dadurch, dass sich der außenluftseitige Wärmetauscher in dieser Betriebsart im Gegensatz zum normalen Klimaanlagenbetrieb abkühlt, können die Wärmetauscheroberflächen schnell Temperaturen deutlich unterhalb des Gefrierpunktes erreichen. Dies führt über kurz oder lang zur Bildung von Raureif bzw. Eisschichten auf den außenluftseitigen Wärmetauscheroberflächen aufgrund kondensierender Luftfeuchtigkeit.

Durch die verhältnismäßig schlechte Wärmeleitfähigkeit des Reifs bzw. Eises wird der Wärmeaustausch mit der Luft beeinträchtigt; auch werden die Strömungs- und Konvektionseigenschaften für die dem Wärmetauscher zugeführte Umgebungsluft durch Eisbildung in den Strömungskanälen deutlich verschlechtert.

Dies führt zu einem leistungsmäßigen Einbruch der Wärmepumpen-Heizleistung, der einen längerdauernden effektiven Heizbetrieb unter Wärmepumpeneinsatz ohne weitere Maßnahmen unmöglich macht.

Unter ökologischen Aspekten gehen die allgemeinen Bemühungen im Kraftfahrzeugklimatisierungsbereich dahin, das Kältemittel R744 (CO₂) bei Kraftfahrzeugklimaanlagen in Serie einzusetzen, da dieses trotz hoher Ansprüche an die Druckfestigkeit der entsprechenden Kältemittelkreisläufe positive Eigenschaften hinsichtlich der Auswirkung auf die globale Erderwärmung sowie weitere Vorteile (u.a. Unbrennbarkeit) aufweist. Mit R744 sind auf der Kälteseite sehr niedrige Temperaturen erzielbar, so dass sich das vorstehend beschriebene Vereisungsproblem tendenziell verstärkt.

Es wurde bereits vorgeschlagen, die Strömungsrichtung im Kältemittelkreislauf bei Vereisung des außenluftseitigen Wärmetauschers kurzfristig umzukehren, wodurch sich der außenluftseitige Wärmetauscher erwärmt und Raureif oder Eisschichten abschmelzen bzw. verdampfen oder sublimieren können.

Bei üblichen Pkw-Klimatisierungssystemen dauert ein derartiger Enteisungsvorgang typischerweise ca. 3 Minuten. Um während dieser nicht unerheblichen Zeit den Klimakomfort im Fahrzeuginnenraum aufrechtzuerhalten, wurde weiterhin vorgeschlagen, in dieser Zeit eine elektrische Widerstandsheizung für den Fahrzeuginnenraum zuzuschalten, was allerdings wiederum mit einem entsprechenden Stromverbrauch verbunden ist.

Ein entsprechendes Konzept ist aus Steiner et al, Energieeffiziente Enteisung bei Pkw-Wärmepumpensystemen, Automobiltechnische Zeitschrift (ATZ), Springer Fachmedien Wiesbaden, Februar 2015, Seiten 40-43, bekannt.

Die EP 2 263 894 B1 offenbart ein Verfahren mit den Merkmalen des Oberbegriffs des Patentanspruchs 1, wobei die Temperatur der den außenluftseitigen Wärmetäuscher anströmenden Luft durch Schließen von Shuttern stromaufwärts des Wärmetauschers erhöht werden kann.

Auch die DE 11 2014 004 045 T5 offenbart ein Verfahren mit den Merkmalen des Oberbegriffs des Patentanspruchs 1, wobei die Temperatur der den außenluftseitigen Wärmetäuscher anströmenden Luft durch Abschalten eines diesem Wärmetauscher zugeordneten Lüfters unterhalb von 20°C erhöht werden kann.

Die US 2011/067427 A1 offenbart ein Verfahren zur Enteisung eines außenluftseitigen Wärmetauschers eines Kraftfahrzeugklimatisierungssystems mit Wärmepumpe, mit der bedarfsweise sowohl eine Kühlfunktion als auch eine Heizfunktion für den Fahrzeuginnenraum bereitgestellt werden kann, bei dem während eines Heizbetriebs bei Erkennung oder Abschätzung eines vorgegebenen Vereisungsgrades des außenluftseitigen Wärmetauschers temporär auf einen Kühlbetrieb umgeschaltet wird, um ein ganz oder teilweises Abtauen des Eises auf dem außenluftseitigen Wärmetauscher zu bewirken, worin zur Aufrechterhaltung der Fahrzeuginnenraumheizung während des Enteisungsvorgangs eine Zufuhr von Wärme aus einem Wärmespeicher zu dem Fahrzeuginnenraum erfolgt.

Der vorliegenden Erfindung liegt daher die Aufgabe zugrunde, ein Enteisungsverfahren der vorstehend beschriebenen Art hinsichtlich des Batteriestrombedarfs während der Enteisungsphase weiter zu optimieren.

Die Lösung der vorgenannten Aufgabe erfolgt mittels eines Verfahrens mit den Merkmalen des Patentanspruches 1.

Vorteilhafte Ausgestaltungen sind in den abhängigen Patentansprüchen beschrieben.

Mit der Zufuhr von Wärme aus einem Wärmespeicher kann die Heizenergielücke batterieneutral überwunden werden, wenn der Wärmespeicher zuvor bei einem Ladevorgang des Fahrzeugs an einer Ladestation aufgeheizt wurde oder anderweitig mit überflüssiger Wärme (z.B. bei einem Hybridfahrzeug aus dem Verbrennungsmotorbetrieb) geladen werden konnte.

Mit der Umschaltung auf Umluftbetrieb und/oder der Reduktion der Luftumwälzgeschwindigkeit kann die erforderliche Heizenergiebedarf temporär verringert werden, da keine kalte Außenluft einströmt bzw. weniger Luftvolumen zu erwärmen ist.

Durch ein Reduzieren der den außenluftseitigen Wärmetäuscher anströmenden Luft kann die Erwärmung dieses Wärmetauschers und damit dessen Abtauen beschleunigt werden.

Durch ein Erhöhen der Temperatur der den außenluftseitigen Wärmetäuscher anströmenden Luft kann ebenfalls die Erwärmung dieses Wärmetauschers und damit dessen Abtauen beschleunigt werden.

Bevorzugt kann der Wärmespeicher als Latentwärmespeicher mit einem PCM-Wärmespeichermaterial ausgebildet sein, dessen Wärme über einen selektiv aktivierbaren Fluidkreislauf in den Fahrzeuginnenraum abgebbar ist. Ferner kann der Latentwärmespeicher bevorzugt aus einer externen elektrischen Energiequelle aufheizbar sein, insbesondere aus einer externen Ladestromquelle für eine Batterie eines Elektro- oder Plug-In-Hybridfahrzeugs.

Das Reduzieren der den außenluftseitigen Wärmetäuscher anströmenden Luft kann bevorzugt durch Schließen eines Kühlergrill-Shutters während des Enteisungsvorgangs und durch Reduzieren der Lüfterdrehzahl eines diesem Wärmetauscher zugeordneten Lüfters erreicht werden.

Gemäß Patentanspruch 1 wird das Erhöhen der Temperatur der den außenluftseitigen Wärmetäuscher anströmenden Luft durch gleichzeitiges Schließen eines Kühlergrill-Shutters während des Enteisungsvorgangs und Betreiben eines diesem Wärmetauscher zugeordneten und stromabwärts des Shutters angeordneten Lüfters erreicht. Durch das gleichzeitige Schließen des Kühlergrill-Shutters und Betreiben des Lüfters kann eine Rezirkulations-Luftströmung im Motorraum des Fahrzeugs erzeugt werden, die im Motorraum vorhandene Abwärme, beispielsweise von Antriebskomponenten des Fahrzeugs, zu dem außenluftseitigen Wärmetauscher transportiert.

Bevorzugt kann der Fahrzeuginnenraum wenigstens während des Enteisungsvorganges zusätzlich über ein elektrisches Heizelement, vorzugsweise über ein Niederspannungs-PTC-Heizelement, beheizt werden.

Weiterhin wird im Rahmen der Erfindung ein zur Ausführung des vorbeschriebenen Verfahrens ausgebildetes Fahrzeugklimatisierungssystem vorgeschlagen.

Dieses kann bevorzugt für einen Betrieb mit dem Kältemittel R744 (=CO₂) ausgebildet sein.

Die Erfindung wird nachfolgend anhand der Zeichnungen beispielhaft näher erörtert. Es zeigen:
- Figur 1: eine schematische Ansicht eines erfindungsgemäßen Fahrzeugklimatisierungsystems; und
- Figur 2: ein schematisches Flussdiagramm zur Erläuterung eines erfindungsgemäßen Steuerungs- und Regelungsverfahrens.

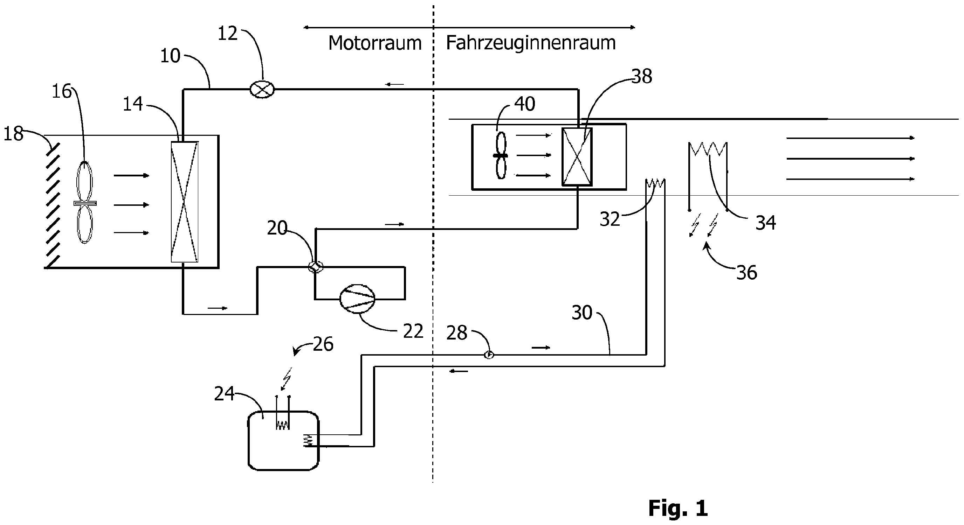

Figur 1 zeigt - stark abstrahiert - die für das Verständnis der vorliegenden Erfindung relevanten Komponenten eines erfindungsgemäßen Fahrzeugklimatisierungssystems, wobei die im Motorraum des Fahrzeugs angeordneten Komponenten, die infolgedessen der über den Kühlergrill eingelassenen Außenluft ausgesetzt sind, links dargestellt sind, und die fahrzeuginnenraumseitigen Komponenten rechts dargestellt sind.

Bei dem Fahrzeug kann es sich um ein Elektrofahrzeug mit einer nicht dargestellten Traktionsbatterie, um ein Hybridfahrzeug mit einem Verbrennungs- und einem Elektromotor oder auch um ein herkömmliches Verbrennungsmotorfahrzeug mit Otto-, Dieselbrennkraftmaschine oder auch um ein brennstoffzellenbetriebenes Fahrzeug od. dgl. handeln.

Das Fahrzeugklimatisierungssystem weist einen geschlossenen Kältemittelkreislauf 10 auf, bei dem das Kältemittel - im Ausführungsbeispiel wird das Kältemittel R744 (CO₂) verwendet, es können prinzipiell aber auch andere Kältemittel verwendet werden - von einem - vorzugsweise elektrisch oder über eine mechanische Kopplung mit einem Verbrennungsmotor angetriebenen - Kompressor 22 umgepumpt und komprimiert wird, dessen Förderrichtung über ein Vierwegeventil 20 umkehrbar ist. Der Kompressor 22 ist strömungsmäßig zwischen einem außenluftseitigen Wärmetauscher 14, der im Frontbereich des Motorraums positioniert ist, und einem fahrzeuginnenraumseitigen Wärmetauscher 38 angeordnet. Der Kältemittelkreislauf wird über eine im anderen Zweig zwischen den beiden Wärmetauschern 14, 38 vorgesehene Drossel 12 geschlossen. Die Drossel bewirkt - wie bekannt - eine Expansion des Kältemittels, und damit thermodynamisch eine Abkühlung, die Kompression durch den Kompressor 22 eine Erwärmung.

Bei der in Figur 1 durch Pfeile an dem Kältemittelkreislauf 10 angedeuteten Strömungsrichtung erfolgt als Resultat eine Heizung des Fahrzeuginnenraums über den Wärmetauscher 38, wobei die Wärme über ein Lüftungsgebläse 40 in die Kanäle einer üblichen Klimatisierungsanlage an den Fahrzeuginnenraum abgeführt wird.

Im Gegenzug erfolgt nach dem Wärmepumpenprinzip eine Aufnahme von Wärme aus der Außenluft über den außenluftseitigen Wärmetauscher 14, und dies auch dann, wenn die Außentemperatur geringer als die Innenraumtemperatur ist. Zur Verbesserung des Wirkungsgrades der so gebildeten Luft-zu-Luft-Wärmepumpenanordnung wird der Luftaustausch des Wärmetauschers 14 mit der Umgebung Luft durch einen Lüfter 16 intensiviert.

Außerdem kann über einen selektiv ansteuerbaren Kühlergrill-Shutter 18 (durch einen Aktuator zu öffnende oder zu schließende Lamellen oder eine Klappe) Fahrtwind auf den Wärmetauscher 14 geleitet werden.

Bei den beiden Wärmetauschern 14, 38 können weiterhin selektiv aktivierbare Bypässe zu deren Umgehung vorgesehen sein.

Wird die Strömungsrichtung durch das Vierwegeventil 20 umgekehrt (d.h. entgegen der Pfeilrichtung bei dem Kreislauf 10 in Figur 1), so arbeitet der Kältekreislauf 10 wie von einer konventionellen Fahrzeugklimaanlage bekannt dahingehend, dass der Innenraum gekühlt wird und die entsprechende Wärme außenseitig über den Wärmetauscher 14 abgeführt wird.

Um im Falle einer Reifbildung bzw. eines Vereisens des außenluftseitigen Wärmetauschers 14 im Heizbetrieb eine Enteisung herbeizuführen, wird die Strömungsrichtung bei Bedarf über das Vierwegeventil 20 umgekehrt, so dass der Wärmetauscher 14 kurzzeitig erwärmt wird und das Eis oder der Reif abgetaut, verdampft oder sublimiert werden. Es sind darüber hinaus natürlich auch andere Möglichkeiten der Strömungsumkehr denkbar, z.B. über separat angeordnete Ventile; letztlich kommt es auf das Ergebnis der Strömungsumkehr an.

Um eine unerwünschte Kälteeinbringung während dieser Enteisung in den Fahrzeuginnenraum zu verhindern, sieht die Erfindung verschiedene Maßnahmen vor, die abhängig von verschiedenen Fahrzeugparametern (z.B. Innen- oder Außentemperatur, Batteriespannung und -Restkapazität sowie Temperatur des nachstehend erläuterten PCM-Latentwärmespeichers 24), einzeln oder gleichzeitig getroffen werden können:
Zum einen kann, wie schon im Stand der Technik grundsätzlich bekannt, ein im Klimatisierungsluftstrom angeordnetes Widerstandsheizelement 34, vorzugsweise ein inhärent temperaturbegrenzter PTC-Luftheizer (Temperaturregelung über den sich vergrößernden Widerstand eines PTC-Kaltleitermaterials) über eine Niederspannungs-Stromzufuhr 36 bestromt werden, was allerdings den elektrischen Energiespeicher bzw. die Energieversorgung des Fahrzeugs stark belastet.

Bevorzugt erfolgt daher die Einspeisung zusätzlicher Wärmeenergie aus einem Latentwärmespeicher 24, der vorzugsweise mit einem PCM-Material gefüllt ist, das einen Phasenwechsel (z.B. fest - flüssig) bei einem Aufwärmen auf eine gewünschte Speichertemperatur durchführt und dann bei Wärmeabgabe wieder erstarrt. Durch die zusätzliche Nutzung der Phasenwechselenergie - zusätzlich zu der Wärmekapazität des Speichermediums selbst - weisen diese Speicher eine hohe spezifische Wärmekapazität auf.

Geeignete thermische Isolation vorausgesetzt, können derartige Latentwärmespeicher 24 bereits bei der stationären Aufladung einer Traktionsbatterie des Fahrzeugs an einer Ladestromquelle mittels eines elektrischen Widerstandsheizers 26 (bei dem es sich ebenfalls um einen PTC-Heizer, in diesem Falle bevorzugt angepasst an die Fahrzeugladespannung mit einem Betrieb im Mittelspannungsbereich, d.h. 250 V oder 400 V) handeln kann) erwärmt werden, da dann die erforderlichen elektrischen Ladeleistungen zur Verfügung stehen und dies nicht zu Lasten einer Traktionsbatterie geht (abgesehen möglicherweise von einer gewissen Verlängerung des Aufladevorganges, falls der Ladestrom für die Batterie bereits an der Grenze der Kapazität der Ladestation liegt.

Damit eignet sich der Latentwärmespeicher insbesondere für die Heizleistungsergänzung bei Enteisungsvorgängen während eines transienten Aufheizbetriebs direkt im Anschluss an einen Aufladevorgang des Fahrzeugs; hier wird er auch meist besonders benötigt. Selbstverständlich kann der Latentwärmespeicher grundsätzlich auch außerhalb von Enteisungsvorgängen zur Ergänzung der Fahrzeuginnenraumheizung herangezogen werden, insbesondere dann, wenn Enteisungsvorgänge voraussichtlich nicht oder seltener benötigt werden. Dies kann z.B. dann der Fall sein, wenn die Temperatur des außenluftseitigen Wärmetauschers über dem Gefrierpunkt gehalten werden kann oder bei trockener Umgebungsluft mit reduzierter Reifbildungsgefahr.

Die in dem Latentwärmespeicher enthaltene Wärme wird dann über ein separates Wärmeträgermedium, bei dem es sich z.B. um Wasser oder ein höhersiedendes Fluid als Wasser handeln kann, mittels eines separaten Kreislaufs 30 in einen weiteren Wärmetauscher 32 transportiert und dort in den Luftstrom der Fahrzeugklimatisierung in Strömungsrichtung hinter dem Wärmetauscher 38 abgegeben. Der Kreislauf 30 wird dabei mittels einer Pumpe 28 umgewälzt. Der Wärmekreiskauf 30 kann darüber hinaus (nicht dargestellt) auch zur Temperierung weiterer Fahrzeugkomponenten, wie der Traktionsbatterie sowie zur Standheizung des Fahrzeuginnenraums bei Verbindung des Fahrzeugs mit der Ladestation verwendet werden. Auch können die in Figur 1 separat dargestellten Wärmequellen 38, 32 und 34 räumlich ineinander integriert werden, wobei es zweckmäßig ist, wenn der Widerstandsheizer 34 oder der Wärmetauscher 32 des Latentwärmespeichers den Wärmetauscher 38 nicht direkt aufheizen, weil dies den Enteisungsprozess am außenseitigen Wärmetauscher 14 beeinträchtigen könnte.

Schließlich wäre es auch denkbar, dass der Latentwärmespeicher, falls dieser auf eine geringere Temperatur als der Luftstrom hinter dem Wärmetauscher 38 abgekühlt ist, durch diesen Luftstrom aufgewärmt werden könnte, indem der Wärmekreislauf 30 dann ebenfalls aktiviert wird. So könnte ein entladener Latentwärmespeicher 24 zwischen den Enteisungsvorgängen wenigstens etwas nachgeladen werden und so an einer Vergleichmäßigung der Fahrzeuginnenraumtemperatur unabhängig von Enteisungsperioden mitwirken.

Abgesehen von den beschriebenen aktiven Heizmaßnahmen können die Auswirkungen des Enteisungsvorganges auf das Fahrzeuginnenraumklima auch zusätzlich oder alternativ noch durch weitere steuerungstechnische Maßnahmen unterstützt werden, insbesondere durch eine temporäre Einschaltung des Umluftbetriebs oder zumindest eine Erhöhung des Umluftanteils, damit nicht so viel kalte Luft von außen erwärmt werden muss, oder eine Reduktion der Intensität der Fahrzeuginnenraumlüftung (Lüfter 40).

Ferner können Maßnahmen, die ein schnelles Erwärmen des außenluftseitigen Wärmetauschers 14 beschleunigen, getroffen werden. Hierzu wird die Zufuhr von kaltem Fahrtwind durch Schließen eines Kühlergrill-Shutters 18 oder durch eine vergleichbare Maßnahme vermindert; ferner kann auch die Drehzahl des Lüfters 16 reduziert werden, wobei eine gewisse Luftzirkulation zweckmäßigerweise aufrecht erhalten bleiben sollte, um einen Abtransport des beim Enteisen entstehenden Wasserdampfes zu gewährleisten.

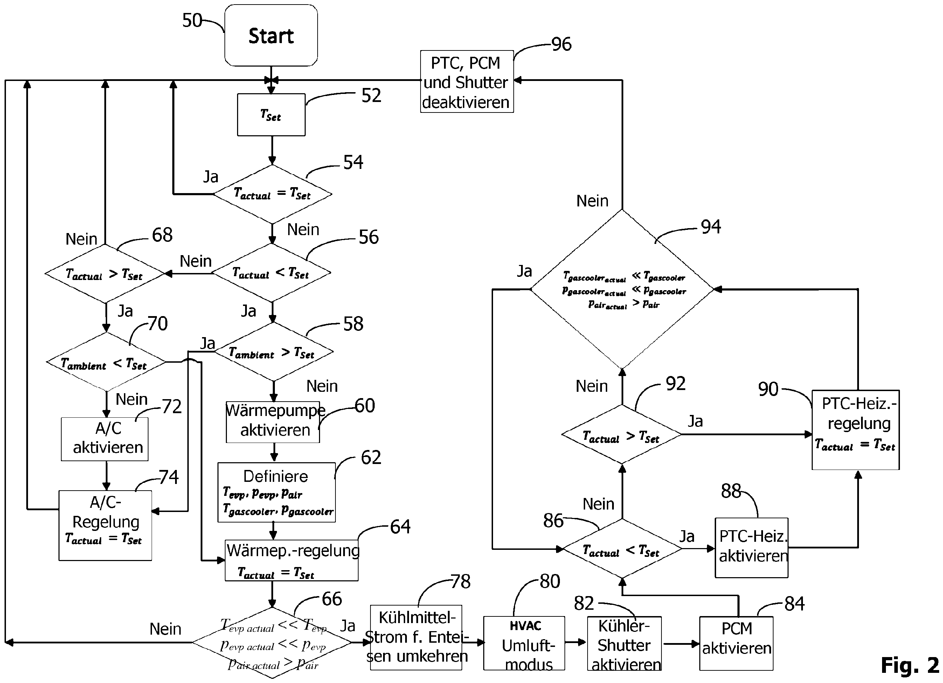

In der Figur 2 ist ein Ablauf eines erfindungsgemäßen Steuerungs- und Regelungsverfahrens beispielhaft dargestellt, wobei die entsprechenden Schritte - soweit technisch sinnvoll - auch in ihrer Reihenfolge verändert werden können oder einzelne Schritte weggelassen oder andere Schritte hinzugefügt werden können.

Der Regelung bzw. Steuerung gemäß Figur 2 werden folgende Größen zugrunde gelegt:
- *Tₛₑₜ*: : Vorgegebene bzw. erforderliche Fahrzeuginnenraumtemperatur
- *T_{Ambient}*: : Umgebungs-Lufttemperatur
- *T_{actual}*: : Aktuelle Lufttemperatur im Fahrzeuginnenraum
- *pₐᵢᵣ*: : erwarteter Luftdruck am außenluftseitigen Wärmetauscher
- *p_{air actual}*: : aktueller Luftdruck am außenluftseitigen Wärmetauscher
- *Tₑᵥₚ*: : erwartete Verdampfer-Kältemitteltemperatur
- *pₑᵥₚ*: : erwarteter Verdampfer-Kältemitteldruck
- *T_{evp actual}*: : aktuelle Verdampfer-Kältemitteltemperatur
- *p_{evp actual}*: : aktueller Verdampfer-Kältemitteldruck
- *T_{gascooler}*: : erwartete Kondensator-Kältemitteltemperatur
- *p_{gascooler}*: : erwarteter Kondensator-Kältemitteldruck
- *T_{gascooler actual}*: : aktuelle Kondensator-Kältemitteltemperatur
- *p_{gascooler actual}*: : aktueller Kondensator-Kältemitteldruck

Die Regelung beginnt ausgehend von Schritt 50 bei der Festlegung 52 der vorgegebenen bzw. erforderlichen Fahrzeuginnentemperatur. Diese wird dann mit der aktuellen Innenraumtemperatur verglichen und je nachdem, ob die aktuelle Temperatur gleich, größer oder kleiner ist (Abfragen 54, 56, 68), erfolgt eine entsprechende Verzweigung. Wenn die Solltemperatur bereits erreicht ist, wird nichts veranlasst (Abfrage 54).

Wenn die aktuelle Innenraumtemperatur oberhalb der vorgegebenen Solltemperatur *Tₛₑₜ* liegt (Abfrage 68), also insgesamt Kühlbedarf für den Innenraum besteht, so wird abhängig davon, ob die Außentemperatur oberhalb oder unterhalb der Solltemperatur liegt (Abfrage 70), entweder eine konventionelle Klimaanlagenregelung mit der Solltemperatur als Sollwert (Schritte 72 und 74) veranlasst (dies für den Fall, dass die Außenumgebungstemperatur oberhalb der Solltemperatur liegt), oder es wird im anderen Falle mit Schritt 64 die Wärme über den Wärmepumpenbetriebsmodus von außen in den Innenraum transportiert, bis die Solltemperatur erreicht ist und die Heizleistung der Wärmepumpe reduziert werden kann

Wenn die aktuelle Innenraumtemperatur unterhalb der vorgegebenen Solltemperatur *Tₛₑₜ* liegt (Abfrage 56), also insgesamt Heizbedarf für den Innenraum besteht, wird abhängig davon, ob die Außentemperatur oberhalb oder unterhalb der Solltemperatur liegt (Abfrage 58), entweder zur der Klimaanlagenregelung in Schritt 74 gesprungen, um die Kühlleistung der konventionellen Klimaanlage zu reduzieren und somit die Innenraumtemperatur auf die Solltemperatur anzuheben, dies für den Fall, dass die Außenumgebungstemperatur oberhalb der Solltemperatur liegt.

Wenn die Außenumgebungstemperatur unterhalb der Solltemperatur liegt (Abfrage 58), wird durch entsprechende Einstellung des Vierwegeventils der Wärmepumpenmodus aktiviert und in Schritt 64 eine Regelung (vorzugsweise der Kompressorleistung) durchgeführt, bis die Solltemperatur erreicht ist.

In diesem Wärmepumpenbetriebsmodus werden zu Anfang in Schritt 62 ferner erwartete Temperatur und Druckverhältnisse als Referenz gemessen oder aus anderen Größen abgeschätzt und zwecks Überwachung eines Vereisens des Wärmetauschers 14 kontinuierlich überwacht.

Diese Überwachung erfolgt in Schritt 66. Wenn die tatsächlich gemessene Temperatur am Verdampfer wesentlich unter die erwartete Temperatur fällt, und/oder, wenn der tatsächliche Kältemitteldruck am Verdampfer unter den erwarteten Kältemitteldruck am Verdampfer fällt, und/oder, wenn der erwartete Luftdruck am außenluftseitigen Wärmetauscher größer als der erwartete Luftdruck am außenluftseitigen Wärmetauscher ist (Luftstau durch Eisbildung), so wird ein Enteisungsvorgang initiiert. Die vorgenannten Kriterien können - ggf. zusammen mit weiteren Kriterien - anhand einzelner Schwellwerte kumulativ überwacht werden, d.h., ein Enteisungsvorgang wird eingeleitet, wenn alle Kriterien oder eine vorgegebene Anzahl erfüllt sind. Alternativ können ein oder mehrere der genannten Kriterien mit vorgegebenen Gewichtungen zu einem gemeinsamen Index umgerechnet werden, dessen Schwellwertüberschreitung dann einen Enteisungsvorgang auslöst.

Zusätzlich können Enteisungsvorgänge zeitabhängig gesteuert werden, d.h., nach Ablauf eines bestimmten Zeitintervalls können ein Enteisungsvorgang unabhängig von Messparametern veranlasst werden, oder Enteisungsvorgänge können für eine vorgegebene Zeitspanne ab dem letzten Enteisungsvorgang oder ab dem Beginn des Wärmepumpenbetriebs unabhängig von Messwerten gesperrt werden.

Ein Enteisungsvorgang beginnt bei Schritt 78 mit der Umkehrung des Kältemittelstroms über das Vierwegeventil 20 oder über eine anderweitig vorhandene Umschaltanordnung.

Außerdem wird bei 80 ein Umluftmodus für das HVAC- bzw. Klimatisierungssystem aktiviert, der dann - so er nicht bereits vorher aktiviert war - nach Abschluss des Enteisungsvorganges wieder deaktiviert wird (nicht dargestellt). Hierdurch wird der Heizbedarf durch den Wegfall einströmender kühler Außenluft temporär reduziert.

Ferner kann (nicht dargestellt) die Drehzahl eines Luftgebläses 40 für die Fahrzeuginnenraumklimatisierung temporär reduziert werden.

Außerdem werden bei 82 Kühlergrill-Shutter 18 geschlossen, so dass der außenluftseitige Wärmetauscher 14 durch den Fahrtwind weniger gekühlt wird. Außerdem kann die Drehzahl des entsprechenden Lüfters 16 reduziert werden.

Ferner wird bei 84 die Wärmefreisetzung aus einem PCM-Latentwärmespeicher 24 aktiviert, z.B. durch Aktivieren einer entsprechenden Pumpe 28 eines Wärmekreislaufes 30. Diese Maßnahme kann auch schon zeitlich etwas vor der Umkehr des Kältemittelstroms erfolgen, um einen kurzzeitigen Temperatureinbruch bei der Umschaltung bis zum Aufheizen des Wärmetauschers 32 zu vermeiden.

Die durch den Latentwärmespeicher 24 nicht bereitstellbare Heizleistung wird in der Regelschleife mit den Schritten 86, 88, 90 und 92 durch Aktivierung des sehr schnell reagierenden PTC-Widerstandsheizelements 34 abhängig von der festgestellten Temperaturdifferenz zwischen Soll- und Istwert ausgeglichen. Je geringer die Temperatur im Latentwärmespeicher ist, desto stärker muss der über die elektrische Heizung abgegebene Anteil sein. Damit hat der energetisch günstigere Latentwärmespeicher 24 automatisch Vorrang gegenüber dem Einsatz des Widerstandsheizelements 34.

In Schritt 94 wird überprüft, ob die Enteisungsbedingungen noch andauern (da der ursprüngliche Verdampfer jetzt als Kondensator arbeitet, ändern sich die Bezeichnungen der überwachten Kältemittelgrößen). Ist dies nicht mehr der Fall, wird die Enteisung als abgeschlossen angesehen und die für die Enteisung getroffenen Maßnahmen werden bei 96 rückgängig gemacht (ebenso, wenn auch nicht dargestellt, wird ein Umluftmodus deaktiviert, falls er vor Beginn der Enteisung deaktiviert war, und evtl. Änderungen der Lüfterdrehzahlen werden rückgängig gemacht).

Dann beginnt der Regelkreislauf bei Schritt 52 von neuem. Der Enteisungsvorgang kann alternativ zu der Abfrage bei Schritt 94 beispielsweise auch rein zeitgesteuert beendet werden.

## Patentansprüche

1. Verfahren zur Enteisung eines außenluftseitigen Wärmetauschers (14) eines Kraftfahrzeugklimatisierungssystems mit Wärmepumpe, mit der bedarfsweise sowohl eine Kühlfunktion als auch eine Heizfunktion für den Fahrzeuginnenraum bereitgestellt werden kann,
bei dem während eines Heizbetriebs bei Erkennung oder Abschätzung eines vorgegebenen Vereisungsgrades des außenluftseitigen Wärmetauschers (14) temporär auf einen Kühlbetrieb umgeschaltet wird, um ein ganz oder teilweises Abtauen des Eises auf dem außenluftseitigen Wärmetauscher (14) zu bewirken, wobei zur Aufrechterhaltung der Fahrzeuginnenraumheizung während des Enteisungsvorgangs die Temperatur der den außenluftseitigen Wärmetäuscher (14) anströmenden Luft erhöht wird,
**dadurch gekennzeichnet, dass**
das Erhöhen der Temperatur der den außenluftseitigen Wärmetäuscher (14) anströmenden Luft durch gleichzeitiges Schließen eines Kühlergrill-Shutters (18) während des Enteisungsvorgangs und Betreiben eines diesem Wärmetauscher (14) zugeordneten und stromabwärts des Kühlergrill-Shutters (18) angeordneten Lüfters (16) erreicht wird.

2. Verfahren nach Anspruch 1,
**dadurch gekennzeichnet, dass**
zur Aufrechterhaltung der Fahrzeuginnenraumheizung während des Enteisungsvorgangs weiterhin ein oder mehrere der folgenden Schritte durchgeführt werden
a) Zufuhr von Wärme aus einem Wärmespeicher (24) zu dem Fahrzeuginnenraum und/oder
b) Umschaltung der Belüftungsanlage in einen Umluftmodus und/oder Reduzieren der Innenraumluftumwälzung und/oder
c) Reduzieren der den außenluftseitigen Wärmetäuscher (14) anströmenden Luft.

3. Verfahren nach Anspruch 1 oder 2,
**dadurch gekennzeichnet, dass**
der Wärmespeicher (24) als Latentwärmespeicher mit einem PCM-Wärmespeichermaterial ausgebildet ist, dessen Wärme über einen selektiv aktivierbaren Fluidkreislauf (30) in den Fahrzeuginnenraum abgebbar ist.

4. Verfahren nach Anspruch 3,
**dadurch gekennzeichnet, dass**
der Latentwärmespeicher (24) aus einer externen elektrischen Energiequelle (26) aufheizbar ist, insbesondere aus einer externen Ladestromquelle für eine Batterie eines Elektro- oder Plug-In-Hybridfahrzeugs.

5. Verfahren nach einem der Ansprüche 1 bis 4,
**dadurch gekennzeichnet, dass**
das Reduzieren der den außenluftseitigen Wärmetäuscher (14) anströmenden Luft durch Schließen eines Kühlergrill-Shutters (18) während des Enteisungsvorgangs und Reduktion der Drehzahl eines diesem Wärmetauscher zugeordneten Lüfters erreicht wird.

6. Verfahren nach einem der Ansprüche 1 bis 5,
**dadurch gekennzeichnet, dass**
der Fahrzeuginnenraum wenigstens während des Enteisungsvorganges zusätzlich über ein elektrisches Heizelement (34), vorzugsweise über ein Niederspannungs-PTC-Heizelement, beheizbar ist.

7. Kraftfahrzeugklimatisierungssystem mit Wärmepumpe,
**dadurch gekennzeichnet, dass**
dieses zur Ausführung eines Verfahrens nach einem der vorhergehenden Ansprüche ausgebildet ist.

8. Kraftfahrzeugklimatisierungssystem nach Anspruch 7,
**dadurch gekennzeichnet, dass**
dieses zu einem Betrieb mit dem Kältemittel R744 (CO₂) ausgebildet ist.

## Claims

1. Method for deicing a heat exchanger (14) on the exterior air side in a motor vehicle air-conditioning system having a heat pump, by means of which both a cooling function and a heating function can be provided for the vehicle interior when required,
in which a switch is made temporarily to a cooling mode during a heating mode if a predetermined icing level of the heat exchanger (14) on the exterior air side is detected or estimated in order to bring about complete or partial thawing of the ice on the heat exchanger (14) on the exterior air side, wherein the temperature of the air impinging on the heat exchanger (14) on the exterior air side is increased during the deicing process to maintain the heating of the vehicle interior,
**characterized in that**
the increase in the temperature of the air impinging on the heat exchanger (14) on the exterior air side is achieved by simultaneously closing a radiator grille shutter (18) during the deicing process and operating a fan associated with this heat exchanger (14) and arranged downstream of the radiator grille shutter (18).

2. Method according to Claim 1,
**characterized in that**
one or more of the following steps are also carried out during the deicing process to maintain the heating of the vehicle interior
a) supplying heat from a heat storage device (24) to the vehicle interior and/or
b) switching the ventilation system into a recirculated air mode and/or reducing the circulation of air within the interior, and/or
c) reducing the air impinging on the heat exchanger (14) on the exterior air side.

3. Method according to Claim 1 or 2,
**characterized in that**
the heat exchanger (24) is designed as a latent heat storage device having a PCM heat storage material, the heat of which can be released into the vehicle interior via a selectively activatable fluid circuit (30) .

4. Method according to Claim 3,
**characterized in that**
the latent heat storage device (24) can be heated from an external electric energy source (26), in particular from an external charging current source for a battery of an electric or plug-in hybrid vehicle.

5. Method according to one of Claims 1 to 4,
**characterized in that**
the reduction of the air impinging on the heat exchanger (14) on the exterior air side is achieved by closing a radiator grille shutter (18) during the deicing process and/or reducing the speed of a fan associated with this heat exchanger.

6. Method according to one of Claims 1 to 5,
**characterized in that**
the vehicle interior can additionally be heated by means of an electric heating element (34), preferably by means of a low-voltage PTC heating element, at least during the deicing process.

7. Motor vehicle air-conditioning system having a heat pump,
**characterized in that**
this is designed to carry out a method according to one of the preceding claims.

8. Motor vehicle air-conditioning system according to Claim 7,
**characterized in that**
this is designed for operation with the refrigerant R744 (CO₂) .

## Revendications

1. Procédé de dégivrage d'un échangeur de chaleur côté air extérieur (14) d'un système de climatisation de véhicule automobile comprenant une pompe à chaleur permettant d'assurer une fonction de refroidissement et une fonction de chauffage de l'habitacle du véhicule en cas de besoin,
procédé dans lequel, en mode chauffage, une commutation en mode refroidissement est effectuée temporairement lors de la détection ou de l'estimation d'un degré prédéterminé de givrage de l'échangeur de chaleur côté air extérieur (14) afin de provoquer une fonte complète ou partielle de la glace se trouvant sur l'échangeur de chaleur côté air extérieur (14), la température de l'air circulant au niveau de l'échangeur de chaleur côté air extérieur (14) étant augmentée afin de maintenir le chauffage de l'habitacle du véhicule pendant le processus de dégivrage,
**caractérisé en ce que**
l'élévation de la température de l'air s'écoulant vers l'échangeur de chaleur côté air extérieur (14) est obtenue par fermeture simultanée d'un volet de calandre (18) pendant le processus de dégivrage et par actionnement d'un ventilateur (16) associé à cet échangeur de chaleur (14) et disposé en aval du volet de calandre (18).

2. Procédé selon la revendication 1,
**caractérisé en ce que**
une ou plusieurs des étapes suivantes sont en outre réalisées pour maintenir le chauffage de l'habitacle du véhicule pendant le processus de dégivrage
a) amener de la chaleur d'un accumulateur de chaleur (24) à l'habitacle du véhicule et/ou
b) commuter le système de ventilation en mode circulation et/ou réduire la circulation d'air intérieur et/ou
c) réduire l'air s'écoulant vers l'échangeur de chaleur côté air extérieur (14).

3. Procédé selon la revendication 1 ou 2,
**caractérisé en ce que**
l'accumulateur de chaleur (24) est conçu comme un accumulateur de chaleur latente comprenant un matériau d'accumulateur de chaleur PCM dont la chaleur peut être libérée dans l'habitacle du véhicule par le biais d'un circuit de fluide (30) qui peut être activé de manière sélective.

4. Procédé selon la revendication 3,
**caractérisé en ce que**
l'accumulateur de chaleur latente (24) peut être chauffé à partir d'une source d'énergie électrique extérieure (26), en particulier d'une source extérieure de courant de charge d'une batterie d'un véhicule électrique ou hybride rechargeable.

5. Procédé selon l'une des revendications 1 à 4,
**caractérisé en ce que**
la réduction de l'air s'écoulant vers l'échangeur de chaleur côté air extérieur (14) est obtenue par fermeture d'un volet de calandre (18) pendant le processus de dégivrage et par réduction de la vitesse de rotation d'un ventilateur associé à cet échangeur de chaleur.

6. Procédé selon l'une des revendications 1 à 5,
**caractérisé en ce que**
au moins pendant le processus de dégivrage, l'habitacle du véhicule peut être chauffé en plus par le biais d'un élément chauffant électrique (34), de préférence par le biais d'un élément chauffant PTC à basse tension.

7. Système de climatisation de véhicule automobile comprenant une pompe à chaleur,
**caractérisé en ce que**
ledit système est destiné à mettre en œuvre un procédé selon l'une des revendications précédentes.

8. Système de climatisation de véhicule automobile selon la revendication 7,
**caractérisé en ce que**
ledit système est conçu pour fonctionner avec le réfrigérant R744 (CO₂).
